# EUROPÄISCHE PATENTSCHRIFT

(11) **EP 2 822 784 B1**
(45) Veröffentlichungstag und Bekanntmachung des Hinweises auf die Patenterteilung: **27.04.2016**
(21) Anmeldenummer: 13708740.9
(22) Anmeldetag: 28.02.2013
(51) Int. Cl.: B60C 23/04, G01L 17/00

(54) **REIFENDRUCKAUFNEHMER UND VERFAHREN ZUM HERSTELLEN EINES SOLCHEN**
TYRE PRESSOR SENSOR AND METHOD FOR MANUFACTURING SAME
CAPTEUR DE PRESSION DE PNEU ET PROCEDE POUR LA FABRICATION DE CELUI-CI

(30) Priorität: 07.03.2012 DE 102012004333
(43) Veröffentlichungstag der Anmeldung: 14.01.2015
(73) Patentinhaber: Alligator Ventilfabrik GmbH, 89537 Giengen (DE)
(72) Erfinder: MARKERT, Christian, 89542 Herbrechtingen (DE)
(74) Vertreter: Dr. Weitzel & Partner
(86) Internationale Anmeldenummer: PCT/EP2013/054003
(87) Internationale Veröffentlichungsnummer: WO 2013/131799

(56) Entgegenhaltungen:
- EP-B1- 2 094 514
- DE-A1- 10 047 853
- DE-U1-202009 007 703
- US-B1- 6 662 665

## Beschreibung

Die vorliegende Erfindung betrifft einen Reifendruckaufnehmer zum Erfassen des Reifendruckes in einem Luftreifen, im Einzelnen gemäß dem Oberbegriff von Anspruch 1. Ferner ist ein Verfahren zum Herstellen eines erfindungsgemäßen Reifendruckaufnehmers angegeben.

Reifendruckkontrollsysteme, wie sie flächendeckend in den USA eingesetzt werden und zunehmend auch in Europa in Personenkraftwagen und Lastkraftwagen zum Einsatz gelangen, weisen innerhalb des Luftreifens auf einer Fahrzeugfelge einen Drucksensor auf, der den Druck innerhalb des Luftreifens erfasst und mittels einer zugeordneten Sendeeinrichtung an einen Empfänger außerhalb des Luftreifens, in der Regel integriert in die Bordelektronik des Fahrzeugs, in Form von geeigneten Signalen sendet. Auf dem Markt hat sich dabei eine Ausführungsform durchgesetzt, bei welcher der Drucksensor zusammen mit der Sendeeinrichtung in einem Gehäuse, in der Regel Kunststoffgehäuse, aufgenommen ist, das beispielsweise mit einer Vergussmasse vergossen sein kann, wobei das Gehäuse entweder unmittelbar an dem Reifenventil, über welches Luft in den Luftreifen eingeleitet oder aus diesem abgelassen wird, angeschlossen ist oder gemäß einer alternativen Ausführungsform an einer anderen an der Felge zu befestigenden Halterung. Beispielsweise offenbaren die Dokumente EP 0 751 017 B1 und US 2007/0113637 A1 verschiedene Möglichkeiten der Befestigung eines den Drucksensor aufnehmenden Gehäuses an einem Reifenventil mit einem sphärisch geformten axialen Ende, an welches das Gehäuse entweder unmittelbar oder über einen zwischengeschalteten Flansch angeschraubt ist.

Um zu ermöglichen, dass sich das Gehäuse möglichst weitgehend an der Felge beziehungsweise dem sogenannten Felgenbett anschmiegt, ist bereits vorgeschlagen worden, das Gehäuse gelenkig und im Winkel einstellbar an dem Reifenventil anzuschließen, sodass der Winkel zwischen dem Reifenventil und dem Gehäuse entsprechend des jeweils vorliegenden Flankenwinkels der Felge eingestellt werden kann. Ferner sind über das Gehäuse geschobene Federelemente vorgeschlagen worden, mittels welchen das Gehäuse gegen das axiale Ende, das insbesondere sphärisch gewölbt ist, des Reifenventils gepresst wird, um ein sicheres Anliegen zu gewährleisten, siehe beispielsweise die Dokumente DE 100 47 853 B4, DE 196 26 145 A1 und DE 101 31 411 A1. Die letztgenannte Schrift schlägt ferner vor, das aufgeschobene gebogene Federelement derart zu gestalten, dass es zusätzlich das Gehäuse gegen das Felgenbett drückt oder zieht.

Die Dokumente DE 103 39 959 B4 und EP 1 510 371 B1 schlagen um den Ventilschaft gewickelte Spiralfedern vor, mittels welchen ebenfalls ein Anpressen des Gehäuses an das Reifenventil erreicht werden soll. Ferner können gemäß der erstgenannten Schrift die beiden abstehenden Enden der Spiralfeder dazu genutzt werden, das Gehäuse gegen das Felgenbett zu drücken.

Die dargestellten Ausführungsformen weisen den Nachteil auf, dass bei besonders steilen Flankenwinkeln von Felgen ein sicheres Aufsetzen und dauerhaftes Anpressen des Gehäuses mit dem Drucksensor auf dem Felgenbett nicht in ausreichendem Maße gewährleistet werden kann. Ferner wird eine Vielzahl von spezialisierten und komplexen Ventildesigns zur Anbindung benötigt.

Die europäische Patentschrift EP 2 094 514 B1 schlägt vor, zwischen Ventil und Gehäuse ein Befestigungselement vorzusehen, das mittels eines Verbindungsteils eine elastische Verbindung zwischen dem Ventil und dem Gehäuse ermöglicht und zugleich eine Aufnahme für eine Dichtung darstellt. Das Gehäuse kann auf einen Endbereich des Befestigungselementes aufgegossen werden.

Auch die europäische Patentschrift EP 1 449 683 B1 schlägt vor, eine Blattfeder zwischen dem Ventil und dem Gehäuse vorzusehen, wobei die Blattfeder Öffnungen aufweist, durch welche aufgeschmolzene Vorsprünge des Gehäuses verriegelnd eingreifen. Bei niedrigen Drehgeschwindigkeiten der Felge drückt die Blattfeder das Gehäuse auf die Felge. Bei höheren Geschwindigkeiten hebt das Gehäuse von der Felge ab, wobei die Abhebebewegung durch das Anstoßen von vorstehenden Seitenwänden der Blattfeder, die eine U-Form bilden, begrenzt wird. Die Seitenwände verhindern ferner eine Verdrehung des Gehäuses gegenüber dem Ventil.

Auch bei den beiden zuletzt dargestellten Ausführungsformen, die ein vergleichsweise sicheres Halten des eine Anpressung auf die Felge erzeugenden Federelementes im Gehäuse ermöglichen, sind der Herstellungsaufwand und die damit verbundenen Kosten hoch, was bei Massenartikeln, wie sie die gattungsgemäßen Reifendruckaufnehmer darstellen, äußerst nachteilig ist. Ferner ist auch hier eine Anpassung der Konstruktion beziehungsweise der Funktionsweise an verschiedene Einsatzprofile hoch.

US 2006/0272402 A sowie DE 100 19 082 A1 beschreiben Reifendruckaufnehmer mit einem Gehäuse, das nicht zum Aufsetzen auf eine Felge vorgesehen ist, sondern innerhalb des Luftraumes des Reifens gehalten wird. Auch gemäß dem Dokument EP 1 321 314 A2 wird das Gehäuse eines Reifendruckaufnehmers von der Felge weggehalten. Entsprechendes gilt für das Gehäuse eines Reifendruckaufnehmers eines Snap-In-Reifenventils gemäß dem Dokument DE 10 2009 035 385 A1. Schließlich beschreibt JP 2004345485 A ein mit Abstand zur Felge gehaltenes Gehäuse eines Reifendruckaufnehmers.

Der vorliegenden Erfindung liegt die Aufgabe zugrunde, einen Reifendruckaufnehmer der dargestellten Art zur Verfügung zu stellen, welcher ein sicheres und dauerhaftes Anliegen des Gehäuses an dem Felgenbett bei verschiedensten Flankenwinkeln gewährleistet, Fehler bei der Montage vermeidet und zugleich eine kostengünstige Herstellbarkeit ermöglicht. Zugleich soll der erfindungsgemäße Reifendrucksensor robust ausgeführt sein und eine lange störungsfreie Betriebsdauer ermöglichen. Ferner soll ein vorteilhaftes Verfahren zum Herstellen eines erfindungsgemäßen Reifendruckaufnehmers angegeben werden.

Die erfindungsgemäße Aufgabe wird durch einen Reifendruckaufnehmer mit den Merkmalen von Anspruch 1 gelöst. In den abhängigen Ansprüchen sind vorteilhafte und besonders zweckmäßige Ausgestaltungen der Erfindung angegeben. Ferner wird ein erfindungemäßes Verfahren angegeben. Ein erfindungsgemäßer Reifendruckaufnehmer zum Erfassen des Reifendruckes in einem Luftreifen weist ein Gehäuse auf, das wenigstens eine Anlagefläche zum Aufsetzen auf eine den Luftreifen tragende Felge aufweist und einen Drucksensor aufnimmt. Ferner ist ein Reifenventil oder auch eine andere an der Felge zu befestigende Halterung, beispielsweise ein von der Felge vorstehender Steg oder Stift beziehungsweise ein durch die Felge durchgreifendes Element vorgesehen, das/die das Gehäuse trägt.

Schließlich weist der erfindungsgemäße Reifendruckaufnehmer wenigstens ein Federelement auf, das einerseits an dem Reifenventil oder der anderen an der Felge zu befestigenden Halterung angeschlossen ist und andererseits an dem Gehäuse angeschlossen ist.

Erfindungsgemäß ist das Federelement teilweise in das Gehäuse eingebettet und das Gehäuse weist im Bereich der Einbettung des Federelementes wenigstens eine durch eine Weichkomponente, welche das Federelement teilweise umgibt, teilweise oder vollständig verschlossene Öffnung auf.

Eine solche Weichkomponente zeichnet sich dadurch aus, dass sie eine geringere Härte und größere Elastizität als das Gehäuse, das insbesondere aus einem Kunststoff gespritzt ist, aufweist. Die Weichkomponente kann beispielweise durch einen Gummi oder ein Elastomer, insbesondere thermoplastisches Elastomer (TPE-Elastomer), gebildet sein.

Vorteilhaft dichtet die Weichkomponente einen innerhalb des Gehäuses vorgesehenen Drucksensor, der beispielsweise auf eine Platine innerhalb des Gehäuses aufgebracht, insbesondere aufgelötet ist, gegen das Gehäuse ab. Dabei kann die Öffnung im Gehäuse, in welche die Weichkomponente eingebracht ist, um diese teilweise oder vollständig im Sinne der Erfindung zu verschließen, dem Drucksensor derart gegenüberstehen, dass die Luft, deren Druck erfasst werden soll, durch eine Öffnung in der Weichkomponente zum Drucksensor strömen kann. Alternativ bildet ein Teilbereich der Weichkomponente eine Membran oder die Weichkomponente wirkt wie eine Membran, die den Druck der umgebenden Luft auf den Drucksensor weiterleitet.

Das Gehäuse, das den Drucksensor und insbesondere weitere Bauteile, wie beispielsweise die Platine und/oder eine Batterie, sowie vorteilhaft eine elektronische Steuerung und/oder andere Sensoren umschließt, kann nach dem Einbringen dieser für die Funktion des Reifendruckaufnehmers notwendigen Bauteile mit einer Vergussmasse ausgegossen werden. Die Vergussmasse ist vorteilhaft aus einem anderen Material als die Weichkomponente hergestellt. Beispielsweise ist die Vergussmasse nach dem Aushärten härter, das heißt weniger elastisch als die Weichkomponente. In der Regel ist die Vergussmasse auch aus einem anderen Material hergestellt als das Gehäuse. Besonders vorteilhaft wird das Federelement nicht von der Vergussmasse durchdrungen.

Eine Ausführungsform sieht vor, dass neben der Öffnung für den Drucksensor im Gehäuse eine weitere Öffnung vorgesehen ist, durch welche auf das Federelement vor dem Verschließen der Öffnung mit der Weichkomponente zugegriffen werden kann, um dieses beim Einbetten in das Gehäuse zu halten. Zugleich kann auch die Öffnung für den Drucksensor für einen solchen Zugriff auf das Federelement genutzt werden. Wenn beispielsweise das Gehäuse gegossen, insbesondere spritzgegossen wird und beim Gießverfahren das Federelement in das Gehäuse eingegossen wird, so kann durch die Öffnung für den Drucksensor oder durch beide Öffnungen, wobei die zweite Öffnung vorliegend als Montageöffnung bezeichnet wird, das Federelement gehalten werden, bis das umgebende Gehäuse ausreichend ausgehärtet ist. Anschließend können die Öffnungen teilweise oder vollständig mit der Weichkomponente verschlossen, beispielsweise ausgegossen werden.

Das Vorsehen der Weichkomponente in der Öffnung des Drucksensors im Gehäuse beziehungsweise zum Abdichten des Drucksensors gegen das Gehäuse hat den Vorteil, dass Vibrationen der Felge gedämpft werden und nicht oder nur gedämpft auf den Drucksensor weitergeleitet werden. Zugleich können weitere sonst notwendige Dichtelemente eingespart werden.

Wenn zusätzlich das Federelement auch auf seiner Oberfläche außerhalb des Gehäuses teilweise oder vollständig mit der Weichkomponente beschichtet ist, so werden Beschädigungen des Reifens beim Aufziehen auf die Felge durch das sonst möglicherweise scharfkantige Federelement ausgeschlossen.

Gemäß einer erfindungsgemäßen Ausführung ist das Federelement mit dem Gehäuse einteilig verbunden. Einteilig in diesem Sinne bedeutet, dass das Federelement eben nicht einfach nur lösbar auf das Gehäuse aufgeclipst ist und dort durch Federspannung gehalten wird, sondern dass das Federelement allenfalls durch Lösen einer formschlüssigen Verbindung, beispielsweise wie einer Verschraubung, vom Gehäuse getrennt werden kann.

Günstig ist, wenn das wenigstens eine Federelement nicht nur einteilig, sondern unlösbar an dem Gehäuse angeschlossen ist. Die Unlösbarkeit kann beispielsweise durch eine stoffschlüssige oder formschlüssige Verbindung mit dem Gehäuse erreicht werden. Zusätzlich oder alternativ kann das Federelement vom Material des Gehäuses durchdrungen sein, demnach eine oder mehrere Durchgangsöffnungen aufweisen, durch welche das Material des Gehäuses, das insbesondere einteilig ausgeführt ist, hindurchragt.

Wie dargelegt, kann das Gehäuse beispielsweise aus Kunststoff gegossen, insbesondere spritzgegossen sein und das Federelement vor dem Gießen oder vor dem Fertiggießen des Gehäuses in die Gussform eingelegt werden, sodass das Federelement nach dem Gießen des Gehäuses in das Gehäuse eingegossen ist.

Eine Ausführungsform sieht vor, dass das Federelement auf das Gehäuse eine Vorspannung im Sinne eines Aufpressens des Gehäuses auf die Felge ausübt.

Gemäß einer erfindungsgemäßen Ausführungsform ist das Federelement als Blattfeder, beispielsweise aus Federstahl, ausgeführt. Eine solche Blattfeder kann vorteilhaft im ungespannten Zustand eine ebene oder im Wesentlichen ebene Erstreckung aufweisen. Gemäß einer alternativen Ausführungsform weist die Blattfeder die Form eines Winkels mit zwei ebenen Schenkeln auf. Jedoch können die Schenkel alternativ auch Krümmungen oder Abkantungen umfassen.

Das Federelement kann beispielsweise an einem seiner axialen Enden eine Bohrung, insbesondere über dem Umfang geschlossene Bohrung, aufweisen, durch welche das Reifenventil beziehungsweise ein Schaft des Reifenventils durchgesteckt ist. Besonders in diesem Fall ist es günstig, wenn das Federelement im Bereich der Bohrung mit der Weichkomponente beschichtet ist, die dann ein Verdrehen des Federelementes gegenüber dem Reifenventil wirkungsvoll verhindert, indem sie einen starken Reibschluss herstellt. Auch kann die Weichkomponente eine komplementäre Form zu einem zugeordneten Bereich des Ventils bilden, um eine gezielte relative Positionierung des Federelementes und damit des Gehäuses und des Ventils zu erleichtern. Vorteilhaft bildet die Weichkomponente mit der komplementären Form einen Formschluss mit einer oder mehreren Hinterschneidungen aus. Zuvor Gesagtes gilt auch dann, wenn das Federelement an einer anderen Halterung als dem Reifenventil angeschlossen ist.

Gemäß einer Ausführungsform ist das Federelement aus Metall, beispielsweise Stahl, hergestellt. Alternativ kommt auch eine Herstellung aus oder mit Karbon in Betracht. Andere Werkstoffe sind möglich.

Gemäß einem erfindungsgemäßen Gedanke ist vorgesehen, dass das Gehäuse eine Signalsendeeinrichtung aufnimmt, die am Drucksensor angeschlossen ist, um Signale entsprechend der vom Drucksensor erfassten Druckwerte an eine außerhalb des Reifendruckaufnehmers vorgesehene Empfangseinrichtung zu senden, wobei das Federelement als Antenne wirkend oder als signalübertragende Verbindung zu einer Antenne an der Signalsendeeinrichtung angeschlossen ist. Hierfür ist es günstig, wenn das Federelement aus Metall oder einem anderen leitenden Material hergestellt ist.

Das Federelement kann, besonders wenn es als Antenne wirkt oder als signalübertragende Verbindung für eine Antenne vorgesehen ist, in einem leitenden Kontakt mit dem Reifenventil oder der anderen an der Felge zu befestigenden Halterung stehen, um Signale der Signalsendeeinrichtung zu dem Reifenventil beziehungsweise der anderen an der Felge zu befestigenden Halterung zu leiten, wobei in diesem Fall das Ventil beziehungsweise die andere Halterung als Antenne genutzt werden kann.

Eine Ausführungsform sieht vor, dass das Federelement eine Stabantenne bildet und entsprechend eine einzige Anschlussverbindung zu der Signalsendeeinrichtung aufweist. Eine alternative Ausführungsform sieht vor, dass das Federelement eine Schleifenantenne bildet und somit über zwei oder mehr Verbindungen an der Signalsendeeinrichtung angeschlossen ist.

Die Weichkomponente kann auch gezielt als elektrischer Isolator zur Konfiguration der Antennengröße herangezogen werden. Beispielsweise können zunächst das Federelement und eine zusätzliche Antenne einteilig hergestellt werden und in das Gehäuse zumindest teilweise eingebettet werden. Anschließend werden eine oder mehrere Kontaktstellen zwischen dem Federelement und der Antenne durchtrennt, wobei die Kontaktstellen durch im Gehäuse vorgesehene Montageöffnungen oder einzubringende Öffnungen zugänglich sind. Anschließend werden die durchtrennten Stellen mit der Weichkomponente als Isolator aufgefüllt und insbesondere die Montageöffnungen oder sonstigen Öffnungen verschlossen, wobei vorteilhaft die gesamte Weichkomponente in einem einzigen Durchgang, beispielsweise unmittelbar im Anschluss an den Spritzgießprozess des Gehäuses, aufgebracht wird.

Durch die Weichkomponente ist somit eine exakte Abstimmung der Antenne durch die elektrische Isolierung gegenüber dem Federelement oder, wenn das Federelement als Antenne genutzt wird, durch elektrische Isolierung gegenüber dem Ventil möglich.

Um eine noch bessere Anschmiegung des Gehäuses an die Felge beziehungsweise das Felgenbett zu erreichen, kann eine im Gehäuse vorgesehene Batterie, die beispielsweise der Stromversorgung des Drucksensors und/oder der Signalsendeeinrichtung dient, winklig zu der Grundfläche beziehungsweise Oberfläche des Drucksensors und/oder einer den Drucksensor tragenden Platine ausgerichtet sein, sodass das Gehäuse entweder an einem in Umfangsrichtung der Felge ausgerichteten Ende konisch verjüngt und/oder abgewinkelt gegenüber dem restlichen Gehäuseteil gestaltet sein kann.

Gemäß einer Ausführungsform nimmt der Drucksensor nicht nur den Druck sondern noch eine oder mehrere weitere Größen auf. Nur Beispielhaft werden die Temperatur, die Batteriespannung und die Beschleunigung beziehungsweise Drehbeschleunigung der Felge genannt. Zusätzlich oder alternativ kann/können ein oder mehrere weitere(r) Sensor(en) zur Aufnahme einer oder mehrerer dieser Größen im oder am Gehäuse, dem Reifenventil und/oder der Halterung vorgesehen sein.

Die Erfindung soll nachfolgend anhand eines Ausführungsbeispiels exemplarisch beschrieben werden.

Es zeigen:
- Figur 1: eine schematische Draufsicht auf einen erfindungsgemäß ausgebildeten Reifendruckaufnehmer;
- Figur 2: eine schematische seitliche Ansicht des Reifendruckaufnehmers aus der Figur 1;
- Figur 3: eine Draufsicht auf einen Teil des Gehäuses der Figur 1 mit einer aufgebrachten Weichkomponente;
- Figur 4: verschiedene Ansichten eines Ausführungsbeispiels der Erfindung;
- Figur 5: verschiedene Ansichten eines anderen Ausführungsbeispiels der Erfindung;
- Figur 6: zwei Querschnitte durch mit der Weichkomponente vollständig beziehungsweise teilweise verschlossene Öffnungen im Gehäuse;
- Figur 7: ein einstückig mit einer Antenne ausgeführtes Federelement, das nach der Einbettung im Gehäuse an den Verbindungsstellen zur Antenne von dieser getrennt wird;
- Figur 8: die Ausführungsform in der Figur 7 mit aufgebrachter Weichkomponente, welche das Federelement und die Antenne elektrisch gegeneinander isoliert.

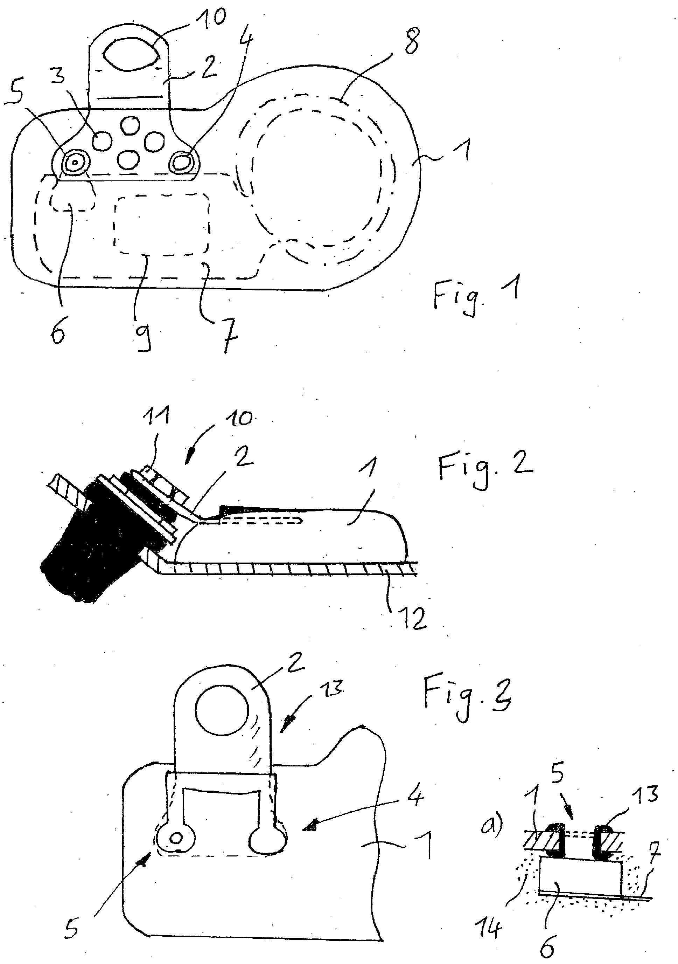

In der Figur 1 sind in ausgezogenen Linien der Umriss des Gehäuses 1 eines erfindungsgemäß ausgeführten Reifendruckaufnehmers sowie eines aus dem Gehäuse 1 herausragenden Federelementes 2 dargestellt. Das Federelement 2 weist Durchgangsöffnungen 3 auf, durch welche das Material des Gehäuses 1 hindurchgegossen ist, sodass das Federelement 3 innerhalb des Gehäuses 1 formschlüssig mit Hinterschneidungen verriegelt ist.

Im Bereich des Federelementes 2 ist im Gehäuse 1 ferner eine erste Montageöffnung 4 vorgesehen, welche dem Halten des Federelementes 2 beim Gießen des Gehäuses 1 an der gewünschten Position dient. Eine zweite Öffnung 5 stellt eine luftdruckleitende Verbindung vom innerhalb des Gehäuses 1 angeordneten Drucksensor 6 zur Umgebung des Gehäuses 1, die durch den Innenraum des Luftreifens (nicht dargestellt) gebildet wird, her. Der Drucksensor 6 ist auf einer Platine 7 positioniert, mittels welcher eine Verbindung zur Stromversorgung 8, hier in Form einer im Gehäuse 1 eingebrachten Batterie, hergestellt wird.

Bei der gezeigten beispielhaften Ausführungsform der Erfindung in der Figur 1 trägt die Platine 7 ferner eine Signalsendeeinrichtung 9, welche die vom Drucksensor 6 erfassten Druckwerte als Signale an einen außerhalb des Reifendruckaufnehmers im Fahrzeug positionierten Empfänger (nicht dargestellt) sendet. Selbstverständlich könnte diese Signalsendeeinrichtung 9 auch im Drucksensor 6 integriert sein. Vorliegend dient die Platine 7 dazu, eine geeignete leitende Verbindung zwischen dem Drucksensor 6 und der Signalsendeeinrichtung 9 sowie zwischen der Stromversorgung 8 und der Signalsendeeinrichtung 9 herzustellen.

In dem gezeigten Ausführungsbeispiel stellt die Platine 7 ferner eine leitende Verbindung zwischen dem Federelement 2 und der Signalsendeeinrichtung 9 her, weswegen hier das Federelement 2 an der Platine 7 anliegt. Somit kann das Federelement 2 als Antenne für die Signalsendeeinrichtung 9 dienen. Wenn ferner das Federelement 2 eine leitende Verbindung zu dem Reifenventil (in der Figur 1 nicht dargestellt), das in die Durchgangsöffnung 10 am äußeren Ende des Federelementes 2 eingesetzt ist, herstellt, so kann zusätzlich oder alternativ kann anstelle des Reifenventils auch eine andere Haltevorrichtung verwendet werden.

Bei der in der Figur 1 dargestellten Ausführungsform ist das axiale Ende des Federelementes 2, das die Durchgangsöffnung 10 trägt, gegenüber dem im Gehäuse 1 eingebetteten Teil abgewinkelt, siehe auch die Figur 2. Gemäß einer anderen Ausführungsform könnte das Federelement 2, das vorteilhaft aus Federstahl hergestellt ist, jedoch auch im nicht vorgespannten Zustand eine ebene Form aufweisen.

In der Figur 2 ist der Reifendruckaufnehmer in einer seitlichen Ansicht angeschlossen an ein Reifenventil 11 und aufgesetzt auf eine Felge 12 dargestellt. Wie man sieht, greift das Reifenventil 11 durch die Durchgangsöffnung 10 im Federelement 2 hindurch und ist beidseits der Durchgangsöffnung 10 am Federelement 2 verankert. Selbstverständlich käme auch eine andere Ausführungsform in Betracht. Aufgrund der Vorspannung, welche das Federelement 2 im Sinne eines Aufpressens des Gehäuses 1 auf die Felge 12 und somit gleichzeitigen Aufpressens des Reifenventils 11 in Richtung aus dem Luftreifen heraus ausübt, kann gegebenenfalls auf die hier dargestellte Verriegelung, beispielsweise durch eine Mutter oder Schraube, auf der der Öffnung in der Felge 12 abgewandten Seite des Federelementes 2 verzichtet werden.

In der Figur 3 ist der Bereich des Reifendruckaufnehmers beziehungsweise des Gehäuses 1 mit dem Federelement 2 nochmals dargestellt, um eine mögliche Beschichtung mit einer Weichkomponente 13 zu erläutern. Im dargestellten Ausführungsbeispiel ist sowohl der aus dem Gehäuse 1 herausragende Teil des Federelementes 2 mit der Weichkomponente 13 beschichtet, als auch ein Teil des Gehäuses 1, der im Bereich des Federelementes 2 beziehungsweise das Federelement 2 abdeckend positioniert ist, siehe den gestrichelt dargestellten Umriss des eingebetteten Bereichs des Federelementes 2. Die Weichkomponente 13 auf dem Gehäuse 1 verschließt zum einen die Montageöffnung 4 und zum anderen die Öffnung 5 für den Drucksensor, letztere zumindest teilweise. Wie in der Einzelheit a im Detail gezeigt ist, greift die Weichkomponente 13 um die Ränder des Gehäuses 1 im Bereich der Öffnung 5 herum, sodass der Drucksensor 6 von innerhalb des Gehäuses 1 gegen die als Dichtung wirkende Weichkomponente 13 zum Anliegen kommt. Dies verhindert, dass die Vergussmasse 14, mittels welcher das Gehäuse 1 nach dem Einbringen der für die Funktion des Reifendruckaufnehmers notwendigen Bauteile ausgegossen wird, in die Öffnung 5 und in den Drucksensor 6 fließt und diese unerwünscht verschließt.

Wie durch die gestrichelten Linien angedeutet ist, könnte die Weichkomponente oder eine andere Komponente die Öffnung 5 auch nach Art einer Membran verschließen und so durch deren elastischen Verformung den Druck aus dem Inneren des Raumes im Luftreifen auf den Drucksensor 6 im Inneren des Gehäuses 1 übertragen.

Die Weichkomponente 13 auf dem Federelement 2 verhindert, dass der Reifen beim Aufziehen auf die Felge beschädigt wird.

Das Ende des Federelementes 2 mit der Durchgangsöffnung 10 kann auch derart mit der Weichkomponente beschichtet sein, dass das Federelement 2 gegenüber dem Reifenventil 11 oder einer anderen Halterung, die das Gehäuse 1 trägt, isoliert ist. Dadurch kann eine gezielte Abstimmung erfolgen, wenn das Federelement 2 als Antenne arbeitet.

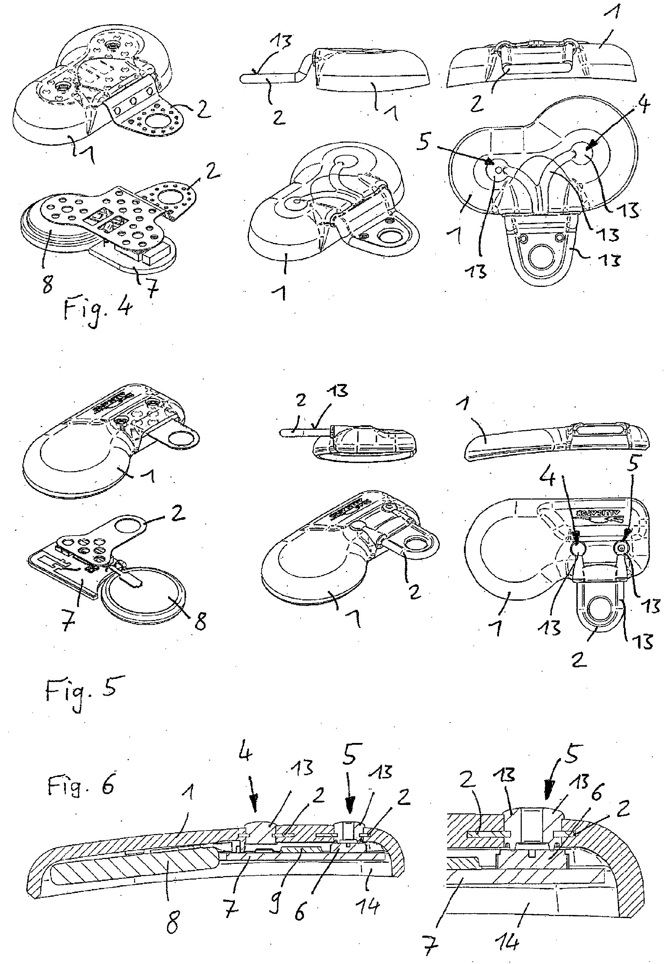

In den Figuren 4 und 5 sind zwei weitere Ausführungsbeispiele der Erfindung in verschiedenen Ansichten dargestellt. Hier erkennt man nochmals, dass sowohl das Federelement 2 als auch Bereiche des Gehäuses 1 mit der Weichkomponente 13 beschichtet sind. Besonders wird deutlich, dass hier das Federelement 2 eine große Anzahl von Durchgangsöffnungen, beispielsweise drei oder mehr, insbesondere fünf oder mehr Durchgangsöffnungen aufweist, welche beim Gießen des Gehäuses 1 von dessen Material durchdrungen werden. Auch erkennt man deutlich, dass der aus dem Gehäuse 1 herausragende Bereich des Federelementes 2 nach dem teilweise Eingießen des Federelements 2 in das Gehäuse 1 mit der Weichkomponente beschichtet wird, wobei auch für diesen Bereich das Federelement zwei Durchgangsöffnungen aufweisen kann, durch welche die Weichkomponente 13 durchdringt.

In der Figur 6 sind nochmals die durch die Weichkomponente 13 verschlossenen Öffnungen 4 und 5 im Gehäuse 1 dargestellt. Die Öffnung 4 dient als Montageöffnung, um das Federelement 2 beim Gießen des Gehäuses 1 zu halten. Die Öffnung 5 dient als Montageöffnung und zusätzlich als Öffnung zur Leitung der Luft zum Drucksensor 6, weshalb das Weichelement 13 die Öffnung 5 nicht vollständig verschließt oder nur durch eine drucknachgiebige Membran verschließt.

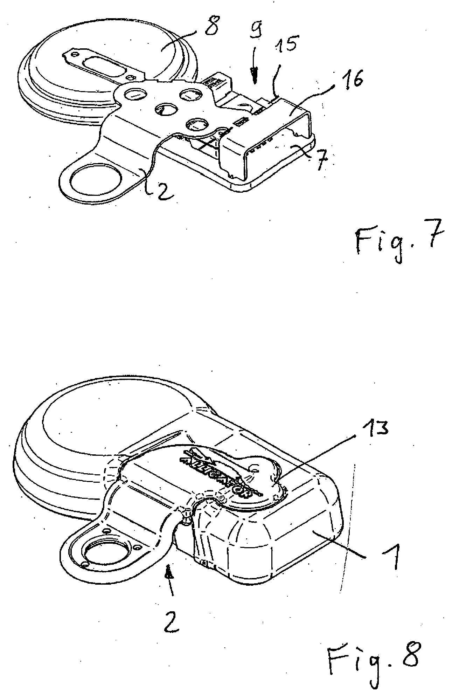

Bei der Ausgestaltung gemäß der Figur 7, bei welcher entsprechende Komponenten mit denselben Bezugszeichen wie zuvor bezeichnet sind, ist eine Antenne 16 für die Signalsendeeinrichtung 9 vorgesehen, die zunächst einstückig beziehungsweise einteilig mit dem Federelement 2, beispielsweise aus Blech, insbesondere durch Stanzen und/oder Biegen oder dergleichen hergestellt ist. Dies hat den Vorteil, dass das Federelement 2 zusammen mit der Antenne 16 beim Aufbringen des Gehäuses (nicht dargestellt), insbesondere durch Gießen oder Spritzgießen, leichter gehalten werden kann. Beispielsweise kann die Antenne 16 auf der Platine 7 befestigt werden und das Federelement 2 tragen, insbesondere ohne dass das Federelement 2 während der Herstellung des Gehäuses zusätzlich abgestützt oder gehalten werden muss. Nach der Herstellung des Gehäuses (nicht dargestellt) wird nun das Federelement 2 im Gehäuse gehalten, so dass die Verbindung zwischen dem Federelement 2 und der Antenne 16 getrennt werden kann, hier beispielsweise entlang der Linie 15. Anschließend wird die Weichkomponente 13 aufgebracht, um die Antenne 16 gegenüber dem Federelement 2 zu isolieren. Dies ist in der Figur 8 dargestellt. Die Öffnung im Gehäuse 1, welche vorgesehen wurde, um die Trennstelle zwischen dem Federelement 2 und der Antenne 16 zugänglich zu halten, wird ebenso durch die Weichkomponente 13 verschlossen.

## Patentansprüche

1. Reifendruckaufnehmer zum Erfassen des Reifendruckes in einem Luftreifen
1.1 mit einem Gehäuse (1), das wenigstens eine Anlagefläche zum Aufsetzen auf eine den Luftreifen tragende Felge (12) aufweist und einen Drucksensor (6) aufnimmt;
1.2 mit einem Reifenventil (11) oder einer anderen an der Felge (12) zu befestigenden Halterung, das/die das Gehäuse (1) trägt;
1.3 mit einem Federelement (2), das einerseits an dem Reifenventil (11) oder an der anderen an der Felge (12) zu befestigenden Halterung angeschlossen ist und andererseits an dem Gehäuse (1) angeschlossen ist;
**dadurch gekennzeichnet, dass**
1.4 das Federelement (2) teilweise in das Gehäuse (1) eingebettet ist und das Gehäuse im Bereich der Einbettung des Federelementes (2) wenigstens eine durch eine Weichkomponente (13), welche das Federelement (2) teilweise umgibt, teilweise oder vollständig verschlossene Öffnung (4, 5) aufweist.

2. Reifendruckaufnehmer gemäß Anspruch 1, **dadurch gekennzeichnet, dass** das Federelement (2) unlösbar am Gehäuse (1) angeschlossen ist.

3. Reifendruckaufnehmer gemäß Anspruch 2, **dadurch gekennzeichnet, dass** das Federelement (2) stoffschlüssig oder formschlüssig mit dem Gehäuse (1) verbunden ist.

4. Reifendruckaufnehmer gemäß einem der Ansprüche 2 oder 3, **dadurch gekennzeichnet, dass** das Federelement (2) vom Material des Gehäuses (1) durchdrungen wird.

5. Reifendruckaufnehmer gemäß Anspruch 4, **dadurch gekennzeichnet, dass** das Gehäuse (1) aus Kunststoff gegossen, insbesondere spritzgegossen, ist und das Federelement (2) in das Gehäuse (1) eingegossen ist.

6. Reifendruckaufnehmer gemäß einem der Ansprüche 1 bis 5, **dadurch gekennzeichnet, dass** das Federelement (2) als Blattfeder, insbesondere als im ungespannten Zustand ebene oder im Wesentlichen ebene Blattfeder ausgeführt ist, oder als Blattfeder, die eine oder mehrere Abkantungen aufweist, ausgeführt ist.

7. Reifendruckaufnehmer gemäß einem der Ansprüche 1 bis 6, **dadurch gekennzeichnet, dass** das Federelement (2) an einem seiner axialen Enden eine Durchgangsbohrung (10), insbesondere über dem Umfang geschlossene Durchgangsbohrung (10) aufweist, durch welche das Reifenventil (11) durchgesteckt ist.

8. Reifendruckaufnehmer gemäß einem der Ansprüche 1 bis 7, **dadurch gekennzeichnet, dass** das Federelement (2) aus Metall und/oder Karbon hergestellt und auf seiner Oberfläche außerhalb des Gehäuses (1) teilweise oder vollständig mit der Weichkomponente (13), insbesondere aus Gummi oder thermoplastischem Elastomer, beschichtet ist.

9. Reifendruckaufnehmer gemäß einem der Ansprüche 1 bis 8, **dadurch gekennzeichnet, dass** das Gehäuse (1) zumindest teilweise oder ausschließlich teilweise mit einer Weichkomponente (13), insbesondere derselben Weichkomponente (13) wie das Federelement (2), beschichtet ist.

10. Reifendruckaufnehmer gemäß Anspruch 9, **dadurch gekennzeichnet, dass** die Weichdruckkomponente (13) den Drucksensor (6) gegen das Gehäuse (1) abdichtet und/oder die Weichkomponente (13) eine Montageöffnung (4) im Gehäuse (1), die dem Halten des Federelementes (2) bei der Herstellung des Gehäuses (1) dient, verschließt.

11. Reifendruckaufnehmer gemäß einem der Ansprüche 1 bis 10, **dadurch gekennzeichnet, dass** das Gehäuse (1) eine Signalsendeeinrichtung (9) aufnimmt, die am Drucksensor (6) angeschlossen ist, um vom Drucksensor (6) erfasste Druckwerte beschreibende Signale an eine außerhalb des Reifendruckaufnehmers vorgesehene Empfangseinrichtung zu senden, und das Federelement (2) als Antenne (16) wirkend oder als signalübertragende Verbindung zu einer Antenne an der Signalsendeeinrichtung (9) angeschlossen ist.

12. Reifendruckaufnehmer gemäß einem der Ansprüche 1 bis 10, **dadurch gekennzeichnet, dass** das Gehäuse (1) eine Signalsendeeinrichtung (9) aufnimmt, die am Drucksensor (6) angeschlossen ist, um vom Drucksensor (6) erfasste Druckwerte beschreibende Signale an eine außerhalb des Reifendruckaufnehmers vorgesehene Empfangseinrichtung zu senden, und das Federelement (2) durch die Weichkomponente (13) gegenüber einer Antenne (16) der Signalsendeeinrichtung (9) isoliert ist.

13. Reifendruckaufnehmer gemäß Anspruch 11, **dadurch gekennzeichnet, dass** das Federelement (2) in einem leitenden Kontakt mit dem Reifenventil (11) oder der anderen an der Felge zu befestigenden Halterung steht, um Signale der Signalsendeeinrichtung (9) zu dem als Antenne wirkenden Reifenventil (11) oder der als Antenne wirkenden anderen Halterung weiterzuleiten.

14. Reifendruckaufnehmer gemäß Anspruch 11 oder 12, **dadurch gekennzeichnet, dass** das Federelement (2) durch die Weichkomponente (13) gegenüber dem Reifenventil (11) oder der anderen an der Felge zu befestigenden Halterung elektrisch isoliert ist.

15. Verfahren zum Herstellen eines Reifendruckaufnehmers, der gemäß Anspruch 12 ausgebildet ist, **dadurch gekennzeichnet, dass** das Federelement (2) einstückig mit der Antenne (16) an der Signalsendeeinrichtung (9) hergestellt und in dem Gehäuse (1) positioniert wird und anschließend das Federelement (2) und die Antenne (16) voneinander getrennt werden und die wenigstens eine Trennstelle mit der Weichkomonente (13) zur Isolierung des Federelementes (2) gegenüber der Antenne (16) gefüllt wird.

16. Verfahren gemäß Anspruch 15, **dadurch gekennzeichnet, dass** das Federelement (2) und die Antenne (16) einstückig teilweise mit dem Material des Gehäuses (1) umgossen oder umspritzt werden, bevor sie voneinander getrennt werden.

## Claims

1. A tyre pressure sensing device for detecting the tyre pressure in a pneumatic tyre
1.1 with a housing (1), comprising at least a contact surface for setting on a rim (12) carrying the pneumatic tyre and containing a pressure sensor (6);
1.2 with a tyre valve (11) or another retainer to be fastened to the rim (12), carrying the housing (1);
1.3 with a spring element (2), which is connected on the one hand to the tyre valve (11) or to the retainer to be fastened to the rim (12) and is connected on the other hand to the housing (1);
**characterised in that**
1.4 the spring element (2) is embedded partially into the housing (1) and the housing in the area in which the spring element (2) is embedded comprises at least one opening (4, 5) partially or completely sealed by a soft component (13), which surrounds the spring element (2) partially.

2. A tyre pressure sensing device according to claim 1, **characterised in that** the spring element (2) is connected to the housing (1) in a non-detachable way.

3. A tyre pressure sensing device according to claim 2, **characterised in that** the spring element (2) is linked to the housing (1), in a firmly bonded manner or in a positively locking manner.

4. A tyre pressure sensing device according to one of the claims 2 or 3, **characterised in that** the spring element (2) is traversed by the material of the housing (1).

5. A tyre pressure sensing device according to claim 4, **characterised in that** the housing (1) is cast of synthetic material, in particular injection moulded and the spring element (2) is poured into the housing (1).

6. A tyre pressure sensing device according to one of the claims 1 to 5, **characterised in that** the spring element (2) is designed as a leaf spring, in particular an even leaf spring in non-tensioned condition or a substantially even leaf spring, or as a leaf spring comprising one or several angles of bend.

7. A tyre pressure sensing device according to one of the claims 1 to 6, **characterised in that** the spring element (2) has a through-bore (10) at one of its axial ends, in particular a through-bore (10) closed over the circumference, through which the tyre valve (11) is inserted.

8. A tyre pressure sensing device according to one of the claims 1 to 7, **characterised in that** the spring element (2) is made of metal and/or carbon and is coated on itst surface outside the housing (1) partially or completely with the soft component (13), in particular made of rubber or thermoplastic elastomer.

9. A tyre pressure sensing device according to one of the claims 1 to 8, **characterised in that** the housing (1) is coated at least partially or exclusively partially with a soft component (13), in particular the same soft component (13) as the spring element (2).

10. A tyre pressure sensing device according to claim 9, **characterised in that** the soft pressure component (13) seals up the pressure sensor (6) against the housing (1) and/or the soft component (13) closes an assembly opening (4) in the housing (1) intended for holding the spring element (2) when producing the housing (1).

11. A tyre pressure sensing device according to one of the claims 1 to 10, **characterised in that** the housing (1) contains a signal transmitting device (9), which is connected to the pressure sensor (6), in order to send signals describing pressure values detected by the pressure sensor (6) to a receiving device provided outside the tyre pressure sensing device, and the spring element (2) is connected, acting as an aerial (16) or as a signal-carrying connection to an aerial at the signal transmitting device (9).

12. A tyre pressure sensing device according to one of the claims 1 to 10, **characterised in that** the housing (1) contains a signal transmitting device (9), which is connected to the pressure sensor (6), in order to send signals describing pressure values detected by the pressure sensor (6) to a receiving device provided outside the tyre pressure sensing device, and the spring element (2) is insulated by the soft component (13) with respect to an aerial (16) of the signal transmitting device (9).

13. A tyre pressure sensing device according to claim 11, **characterised in that** the spring element (2) is in conductive contact with the tyre valve (11) or with the other retainer to be fastened to the rim, in order to transfer signals to the signal transmitting device (9) to the tyre valve (11) acting as an aerial or to the other retainer acting as an aerial.

14. A tyre pressure sensing device according to claim 11 or 12, **characterised in that** the spring element (2) is electrically insulated by the soft component (13) with respect to the tyre valve (11) or the other retainer to be fastened to the tyre.

15. A method of producing a tyre pressure sensing device which is built according to claim 12, **characterised in that** the spring element (2) is built as a single piece with the aerial (16) on the signal transmitting device (9) and is positioned in the housing (1) and subsequently the spring element (2) and the aerial (16) are separated from each other and said at least one dividing point is filled with the soft component (13) for insulating the spring element (2) with respect to the aerial (16).

16. A method according to claim 15, **characterised in that** the spring element (2) and the aerial (16) are insert cast and insert moulded partially with the material of the housing (1), before being separated from each other.

## Revendications

1. Capteur de pression des pneus destiné à détecter la pression de gonflage dans un pneumatique
1.1 avec un boîtier (1) qui dispose d'au moins une surface de retenue sur laquelle peut être posée une jante (12) portant le pneumatique et qui accueille un capteur de pression (6) ;
1.2 avec une valve de pneu (11) ou un autre support destiné à être fixé sur la jante (12), lesquels portent le boîtier (1) ;
1.3 avec un élément ressort (2) qui est raccordé d'une part à la valve de pneu (11) ou à l'autre support destiné à être fixé sur la jante (12) et qui est raccordé d'autre part au boîtier (1) ;
**caractérisée en ce que**
1.4 l'élément ressort (2) est enrobé en partie dans le boîtier (1) et que le boîtier dispose, dans la zone d'enrobement de l'élément ressort (2), d'au moins une ouverture (4, 5) fermée en partie ou entièrement par un composant souple (13) qui entoure en partie l'élément ressort (2).

2. Capteur de pression des pneus selon la revendication 1, **caractérisé en ce que** l'élément ressort (2) est raccordé de manière inamovible au boîtier (1).

3. Capteur de pression des pneus selon la revendication 2, **caractérisé en ce que** l'élément ressort (2) est raccordé au boîtier (1) par fermeture géométrique ou par liaison de matière.

4. Capteur de pression des pneus selon l'une des revendications 2 ou 3, **caractérisé en ce que** l'élément ressort (2) est traversé par le matériau du boîtier (1).

5. Capteur de pression des pneus selon la revendication 4, **caractérisé en ce que** le boîtier (1) est moulé en matière plastique, plus particulièrement moulé par injection, et que l'élément ressort (2) est moulé dans le boîtier (1).

6. Capteur de pression des pneus selon l'une des revendications 1 à 5, **caractérisé en ce que** l'élément ressort (2) est conçu sous forme de ressort à lame, plus particulièrement sous forme de ressort à lame plan dans un état non tendu ou essentiellement, ou est conçu sous forme de ressort à lame disposant d'une ou de plusieurs chanfreins.

7. Capteur de pression des pneus selon l'une des revendications 1 à 6, **caractérisé en ce que** l'élément ressort (2) dispose d'un alésage de passage (10) au niveau d'une de ses extrémités axiales, plus particulièrement d'un alésage de passage (10) circonférentiellement fermé, à travers lequel la valve de pneu (11) est enfichée.

8. Capteur de pression des pneus selon l'une des revendications 1 à 7, **caractérisé en ce que** l'élément ressort (2) est fabriqué en métal et/ou carbone et que sa surface se trouvant à l'extérieur du boîtier (1) est recouvert en partie ou entièrement du composant souple (13), plus particulièrement d'un composant en caoutchouc ou en élastomère thermoplastique.

9. Capteur de pression des pneus selon l'une des revendications 1 à 8, **caractérisé en ce que** le boîtier (1) est recouvert exclusivement ou au moins en partie d'un composant souple (13), plus particulièrement du même composant souple (13) que l'élément ressort (2).

10. Capteur de pression des pneus selon la revendication 9, **caractérisé en ce que** le composant de pression souple (13) étanche le capteur de pression (6) par rapport au boîtier (1) et/ou que le composant souple (13) ferme une ouverture de montage (4) dans le boîtier (1), laquelle sert comme support de l'élément ressort (2) lors de la fabrication du boîtier (1).

11. Capteur de pression des pneus selon l'une des revendications 1 à 10, **caractérisé en ce que** le boîtier (1) accueille un dispositif d'émission de signaux (9) qui est raccordé au capteur de pression (6) afin d'émettre des signaux comprenant des valeurs de pression relevées par le capteur de pression (6) à un moyen de réception prévu à l'extérieur du capteur de pression des pneus, et que l'élément ressort (2) est raccordé au dispositif d'émission de signaux (9) afin de pouvoir servir comme antenne (16) ou comme connexion permettant de transmettre des signaux à une antenne.

12. Capteur de pression des pneus selon l'une des revendications 1 à 10, **caractérisé en ce que** le boîtier (1) accueille un dispositif d'émission de signaux (9) qui est raccordé au capteur de pression (6) afin d'émettre des signaux comprenant des valeurs de pression relevées par le capteur de pression (6) à un moyen de réception se trouvant à l'extérieur du capteur de pression des pneus, et que l'élément ressort (2) est isolé par rapport à une antenne (16) du dispositif d'émission de signaux (9) au moyen du composant souple (13).

13. Capteur de pression des pneus selon la revendication 11, **caractérisé en ce que** l'élément ressort (2) est en contact conducteur avec la valve de pneu (11) ou un autre support destiné à être fixé sur la jante pour retransmettre des signaux venant du moyen d'émission de signaux (9) à la valve de pneu (11) servant comme antenne ou à l'autre support servant comme antenne.

14. Capteur de pression des pneus selon la revendication 11 ou 12, **caractérisé en ce que** l'élément ressort (2) est isolé électriquement par rapport à la valve de pneu (11) ou à l'autre support destiné à être fixé sur la jante au moyen du composant souple (13).

15. Procédé de fabrication pour un capteur de pression des pneus qui est conçue selon la revendication 12, **caractérisé en ce que** l'élément ressort (2) est fabriqué en une seule pièce avec l'antenne (16) au niveau du moyen d'émission de signaux (9) et positionné dans le boîtier (1) et que l'élément ressort (2) et l'antenne (16) sont ensuite séparés l'un de l'autre et que l'au moins un point de séparation, est rempli par le composant souple (13) pour l'isolation de l'élément ressort (2) par rapport à l'antenne (16).

16. Procédé selon la revendication 15, **caractérisé en ce que** l'élément ressort (2) et l'antenne (16) sont partiellement et en une seule pièce entourés, par coulage ou par injection, par le matériau du boîtier (1) avant qu'ils soient séparés l'un de l'autre.
